# EUROPEAN PATENT APPLICATION

(11) **EP 4 588 687 A1**
(43) Date of publication of application: **23.07.2025**
(21) Application number: 23865425.5
(22) Date of filing: 08.09.2023
(51) Int. Cl.: B43K 27/12, B43K 29/02, B43K 24/10, B43K 24/16, G06F 3/03, G06F 3/0354

(54) **PEN STRUCTURE, BALL-POINT PEN, AND TOUCH PEN**

(30) Priority: 12.09.2022 JP 2022144462; 05.09.2023 JP 2023143402
(71) Applicant: Maruyama, Nobutaka, Nagoya-shi, Aichi 460-0012 (JP)
(72) Inventor: Maruyama, Nobutaka, Nagoya-shi, Aichi 460-0012 (JP)
(74) Representative: Metida
(86) International application number: PCT/JP2023/032880
(87) International publication number: WO 2024/058070

(57) **Abstract**

To provide a pen structure that is easy to operate for switching colors and functions, and easy to write without interference when writing. The pen structure S has a pen barrel 10 to be held by hand, and a plurality of pen nibs 11a-11c disposed at one end of the pen barrel 10, which are oriented to open outward from a direction along the axis center line of the pen barrel 10. Further, it is preferred to further provide one or more nibs 12 and erasers 13, which are disposed at the other end of the pen barrel 10.

## Description

### [Incorporation by Reference]

This application claims priority to Japanese Patent Application No. 2022-144462 filed on September 12, 2022, the contents of which are incorporated herein by reference.

### [Technical Field]

This invention relates to a pen structure, ballpoint pen, and stylus with multiple pen tips.

### [Background Art]

Traditionally, multicolor ballpoint pens have been known. These multicolor ballpoint pens are designed to eject one color at a time by using a knock mechanism or a rotary ejection mechanism. In addition, a pen with multiple pens combined into a single pen, with the nib always exposed and without the need for a knock or rotary feed mechanism, has also been proposed, but most of them have straight pen barrels arranged parallel to each other (see, for example, patent document 1 for those with a rotary feed mechanism).

### [Prior Art Documents]

### [Patent Documents]

[Patent document 1] Japanese Utility Model Application No. 60-120886

### SUMMARY OF THE INVENTION

### [Problems to be solved by the Invention]

Most of these conventional multicolor ballpoint pens use a knock mechanism to push out the required color from a multicolor ballpoint pen core, or a rotation mechanism to eject the pen. Most of these ballpoint pens with a knock mechanism tend to have a thick pen barrel. In addition, since it is necessary to change the pen barrel and knock or rotate the pen every time the color is changed, it is cumbersome to operate when the pen is used frequently for different colors, such as for schedule management or study purposes. In addition, the knock mechanism generates a frequent switching sound when changing colors, which can be a source of frustration for those around the user, especially in situations such as workplaces, customer offices, and meetings.

There were also some pens with multiple nibs exposed without using a knock mechanism, but they had only two nibs and the two pen barrels were parallel, so there was only a small separation angle between the nibs, which interfered with the nibs of other colors when writing and made the body barrel thicker.

Other methods have been proposed to push out multiple pen nibs at the same time and fix them at a single point, but the pen nibs are hidden behind the body and difficult to see when writing, and the small separation angle and close distance between the adjacent nibs of the colors cause interference between the different colors when writing. Some nibs with a knock mechanism also have rubbers to reduce the noise of switching between colors, but the work required to knock and change nibs when switching between colors is still time-consuming.

Therefore, an object of this invention is to provide a pen structure that is easy to operate for switching colors and functions, and easy to write without interference when writing.

### [Means for solving the Problem]

To achieve the aforementioned objects, the pen structure of the present invention has a pen barrel held by hand and a plurality of pen nibs disposed at one end of the pen barrel, which are oriented to open outward from a direction along the axis center line of the pen barrel.

The ballpoint pen has the structure of the pen described above, a plurality of core holes formed in one end of the pen barrel, which are oriented to open outwardly from a direction along the axis centerline of the pen barrel, and a plurality of color cores as a plurality of nibs inserted respectively in the plurality of core holes.

Furthermore, the stylus has the structure of the pen described above and is provided with a plurality of stylus tips located at one end of the pen barrel, which are oriented to open outward from a direction along the axis centerline of the pen barrel.

### [Advantageous Effects of the Invention]

Thus, the pen structure has a pen barrel to be held by hand, and a plurality of pen nibs located at one end of the pen barrel, which are oriented to open outward from a direction along the axis centerline of the pen barrel. Such a configuration makes the pen structure easy to operate for switching colors and functions, and easy to write without interference when writing.

The ballpoint pen has the structure of the pen described above, and includes a plurality of core holes formed at one end of the pen barrel, which are oriented to open outward from a direction along the axis centerline of the pen barrel, and a plurality of color cores as a plurality of pen tips inserted respectively into the plurality of core holes. Such a configuration makes the ballpoint pen easy to operate for switching colors and functions and easy to write without interference when writing.

Furthermore, the stylus has the structure of the pen described above and includes a plurality of stylus tips located at one end of the pen barrel, which are oriented to open outward from the direction along the axis centerline of the pen barrel. Such a configuration makes the stylus easy to operate for switching colors and functions, and easy to write without interference when writing.

### BRIEF DESCRIPTION OF THE DRAWINGS

Fig. 1 is a plan view of the overall configuration of the ballpoint pen of Example 1.
Fig. 2 is a side view of the ballpoint pen of Example 1.
Fig. 3 is a front view of the ballpoint pen of Example 1.
Fig. 4 is a cross-sectional view of the ballpoint pen of Example 1. (a) is the A-A cross section of Fig. 1, (b) is the B-B cross section of Fig. 1, and (c) is the C-C cross section of Fig. 1.
Fig. 5 is an enlarged cross-sectional view of the configuration near the tip of the ballpoint pen of Example 1.
Fig. 6 is a side view of the overall configuration of the stylus of Example 2.
Fig. 7 is a diagram illustrating the structure of the pen of Example 3. (a) is a diagonal view and (b) is a front view.
Fig. 8 is an action diagram illustrating the action of the structure of the pen in Example 3.
Fig. 9 is a diagram illustrating the structure of the pen of Example 4. (a) is a front view and (b) is a conceptual diagram illustrating the position of the pen nib.
Fig. 10 is an action diagram illustrating the action of the structure of the pen in Example 4.
Fig. 11 is a diagram illustrating the shape of the pen structure of Example 5.
Fig. 12 is a front view illustrating the structure of the pen of Example 5.

### EMBODYMENT FOR CARRYING OUT THE INVENTION

The following description of the embodiments of the invention will be given with reference to the drawings. However, the components described in the following forms and examples are illustrative, and are not intended to limit the technical scope of the invention to them alone.

### [Example 1]

### (Structure)

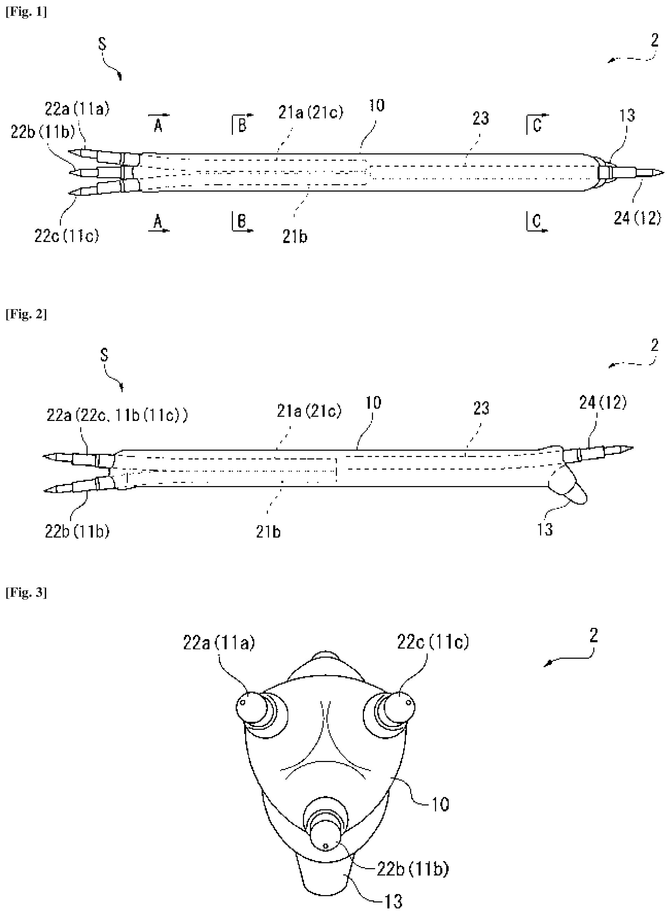

First, the configuration of a multicolor ballpoint pen 2 with the structure S of the pen will be described with reference to Figs. 1 and 2. As shown in Figs. 1 and 2, the pen structure S included in the ballpoint pen 2 in this example has a pen barrel 10 to be held by hand, a plurality of pen nibs 11a to 11c disposed at one end of the pen barrel 10, which are oriented to open outward from a direction along the axis centerline of the pen barrel 10, and a plurality of cores 22a to 22c, as the colored nibs 11a to 11c, which are oriented to open outwardly from the direction along the axis centerline of the pen barrel 10. As described below, these nibs 11a-11c are each oriented to separate from each other toward the tip. These plurality of color cores 22a-22c are of different colors and can be, for example, light blue, blue, red or black.

For example, the first nib 11a on the tip side is bent from the base side to the tip side (from right to left in Fig. 2) to open outward from a direction along (parallel to) the axis center line of the pen barrel 10 (a straight line connecting the centers of the circular cross sections). The second and third pen nibs 11b and 11c have the same abbreviated configuration. As a result, the first through third pen nibs 11a-11c are oriented so that they are separated from each other.

Further, the pen structure S in this example further includes a color core 24 as one (or more) pen nibs 12, which are located at the other end of the pen barrel 10. This forth nib 12 is also then oriented to open outwardly from a direction along the axis centerline of the pen barrel 10 in almost the same manner as in the first to third nibs.

That is, the fourth nib 12 at the base end is bent from the tip side toward the base end (from left to right in Fig. 2) to open outward from a direction along (parallel to) the axis centerline of the pen barrel 10 (a straight line connecting the centers of the circular cross sections).

The pen structure S in this example further includes an eraser 13, which is placed at the other end of the pen barrel 10. Here, as this eraser 13, an ordinary sand eraser can be used, or in the case of using ink whose color disappears with heat, a member that generates frictional heat can be used.

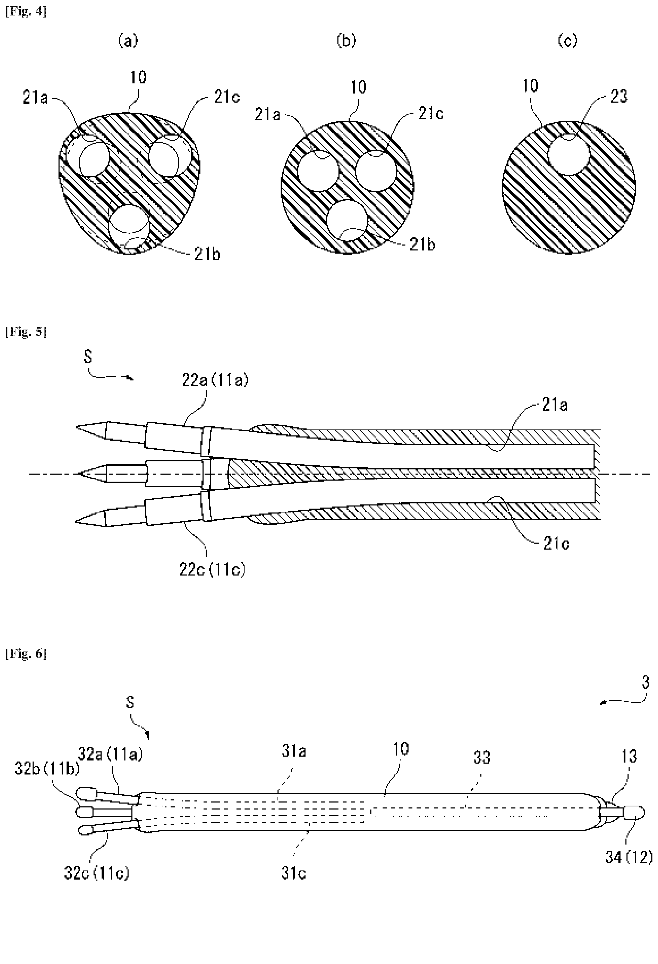

The multicolor (four-color) ballpoint pen 2 including the pen structure S in this example is, specifically, as shown in Figs. 4 and 5, three core holes 21a-21c formed in one end of the pen barrel 10, which are oriented to open outward from the direction along the axis centerline of the pen barrel 10, three core holes 21a-21c, and three color cores 22a-22c as three pen nibs (11a-11c) inserted respectively in the pen barrel 10. Three color cores 22a-22c are formed about half the length of the pen barrel 10.

In addition, the ballpoint pen 2 further includes a color core 24 as one nib 12, which is located at the other end of the pen barrel 10. This color core 24 is formed about half the length of the pen barrel 10. The outer diameter of each color core 22a (22b, 22c, 24) is determined to be approximately the same (in fact, slightly smaller) than the inner diameter of the corresponding core hole 21a. Since the color cores 22a-22c of the ballpoint pen 2 are compactly housed near the center of the pen barrel 10, the pen barrel 10 can be thin and easy to hold.

More specifically, as shown in Figs. 4(a) and 4(b), three core holes 21a through 21c are formed on the tip side of the pen barrel 10, and each core hole 21a (21b, 21c) is bent from near to far from the center of the cross section as it goes to the tip side.

When viewed in cross section cut along the axis centerline, as shown in Fig. 5, it curves outward from the direction along the central axis line toward the tip side. From the other viwepoint, a conical (wedge-shaped; cone-shaped) region remains near the end of the pen barrel 10, and this remaining conical region separates the nibs 11a-11c from each other so that they open outward (the "wedge-shaped support mechanism").

On the other hand, at the base end of the pen barrel 10, as shown in Fig. 4(c), one core hole 23 is formed, and the core hole 23 curves from a position closer to the center of the cross section to a position farther away as it goes toward the base end. When this is seen in a cross-section cut along the axis centerline, it curves from a direction along the center axis line, not shown in the Fig. 4(c), toward the base end to open outward.

Accordingly, the color core 22a inserted into the core hole 21a is bent to follow the shape of the core hole 21a and is pressed against the inner surface of the core hole 21a by the elastic force of the color core 22a itself. Therefore, the frictional force between the color core 22a and the core hole 21a prevents the color core 22a from slipping out of the core hole 21a even without a special fixture. The color core 22a can be pulled out from the core hole 21a by pulling the color core 22a with strong force.

These plurality of color cores 22a-22c as a plurality of pen nibs have three core holes 21a-21c and three (3) color cores 22a-22c, as shown in the front view in Fig. 3, and the color cores 22a-22c are arranged at 120 degrees apart in the circumferential direction. That is, these three color cores 22a-22c are arranged in a position where their tip positions are rotationally symmetrical (displaced by 120 degrees) with respect to the axis center line.

Therefore, when actually using the ballpoint pen 2, the color cores 22a through 22c can be changed to different colors by simply rotating the pen barrel 10 by 120 degrees in the forward and reverse directions while holding the pen barrel 10 with the fingers. For example, the color can be changed from light blue color core 22a to red color core 22c by rotating in the forward direction (clockwise when viewed from the front), and from light blue color core 22a to blue color core 22b by rotating in the reverse direction.

Further, the color cores 22a (22b, 22c) are pressed not only near the exit but also over a wide area into the core hole 21a (21b, 21c), which stabilizes the writing point of the tips of the color cores 22a (22b, 22c), resulting in a ballpoint pen 2 that is considerably easy to write with little shake. In addition, when actually writing, the color core 22a is placed face down, and since the tips of remaining two color cores 22b and 22c do not overlap in this position, the writing point is considerably easy to view and easy to write with.

Moreover, although not limited to this, it is also desirable for the core hole 21a (21b, 21c) to have a curved shape that becomes more curved toward the tip exit (like a clothoid curve). If the curvature gradually increases as it approaches the opening of the core hole 21a, the color core 22a (22b, 22c) is pressed against the core hole 21a (21b, 21c) over a wide area, but is pressed most strongly near the exit. Therefore, the fixation of the color cores 22a (22b, 22c) is further increased near the exit. This stabilizes the writing point of the nib (i.e., shortens the length of the free end), resulting in a ballpoint pen that is less shaky and considerably easy to write with.

### (Advantageous Effects)

Next, the advantageous effects of the ballpoint pen 2 including the structure S of the pen in this example will be enumerated and described.
(1) As has been described above, the pen structure S in this example has a pen barrel 10 to be held by hand, and a plurality of pen nibs 11a-11c disposed at one end of the pen barrel 10, which are oriented to open outward from a direction along the axis center line of the pen barrel 10 . Such a configuration makes the pen structure easy to operate for switching colors and functions, and easy to write without interference when writing. That is, the structure S of the pen in this example allows writing without interference one color at a time, while keeping the different colors exposed.
(2) By further providing one or more nibs 12 located at the other end of the pen barrel 10, a greater number of nibs 12 can be used to provide a greater variety of colors and functions. This ability to use both ends of the pen barrel 10 is because of the fact that the structure S of the pen is considerably simple.
(3) Moreover, by further providing an eraser 13 located at the other end of the pen barrel 10, it is possible to quickly erase the missed part by reversing the pen barrel 10 in the event of a writing error.
(4) The ballpoint pen 2 in this example corresponds to a ballpoint pen 2, including any of the pen structures S described above, having a plurality of core holes 21a-21c formed in one end of the pen barrel 10, which are oriented to open outwardly from a direction along the axis center line of the pen barrel 10, a plurality of core holes 21a-21c, and a plurality of color cores 22a-22c as a plurality of pen nibs inserted into each of the plurality of core holes 21a-21c.

This configuration makes the ballpoint pen 2 easy to switch between the color cores 22a-22c and easy to write without interference when writing. That is, the ballpoint pen 2 in this example allows writing with the different colors exposed, one color at a time, without interference. Further, this simple configuration with a core hole 21a and a color core 22a has the effect of making the pen barrel 10 thinner because the structure is simpler. Therefore, the multicolor ballpoint pen 2 of the present invention is considerably easy to grip and write with.

The ballpoint pen 2 is designed to be used on a desk or carried between notebooks or organizers, and even when the nib is always exposed and fixed, the angle of each color core 22a-22c of the ballpoint pen 2 with the beveled tip is slightly off center of the pen barrel, and thus the pen will not stain the paper surface when carried around. Moreover, when the pen is inserted in a notebook or pocketbook, the nib is slightly spread out so that it is hard to slip off the pen, and the multicolor ballpoint pen is hard to roll when placed on a desk.

Furthermore, unlike conventional multicolor ballpoint pens with a knock mechanism for each color, the ballpoint pen 2 of this invention corresponds to a multicolor ballpoint pen that does not generate any knocking sound when switching colors or interference noise or vibration of parts. Even in the future, when all colors are exposed with a single knock and the pen includes an advancing mechanism that pulls the pen back into the body, no knocking sound will be generated when switching colors (although a knocking sound will be generated during the advancing/retracting movement).

(5) In addition, since the pen has three core holes 21a-21c and three color cores 22a-22c, and the color cores 22a-22c are arranged at 120 degrees apart in the circumferential direction, the user can easily switch to a different color simply by rotating the pen barrel 10 120 degrees in the forward and reverse directions. Further, with three pens, the nibs are less likely to overlap when writing. Conversely, with four or more nibs, the nibs overlap, making writing difficult.

(6) Further, the plurality of color cores 22a-22c are freely inserted and retracted into the plurality of core holes 21a-21c, and it is preferable to further provide a movement mechanism to move all of the plurality of color cores 22a-22c forward and backward simultaneously. As such a movement mechanism, specifically, a "knock cam mechanism" can be used, which is configured by a "cam body (outer cam)", a "knock rod" and a "rotor."

### [Example 2]

The stylus 3 including the structure S of the pen is described below with reference to Fig. 6. The same reference numerals will be used to describe parts that are identical or equal to those described in Example 1.

### (Structure)

First, Fig. 6 is referenced to describe the configuration of the stylus 3 including the structure S of the pen. As shown in Fig. 6, the pen structure S included in the stylus 3 in this example has a pen barrel 10 to be held by hand, a plurality of stylus tips 32a-32c disposed at one end of the pen barrel 10, which are oriented to open outward from a direction along the axis centerline of the pen barrel 10. As described below, these stylus tips 32a-32c are each oriented to separate from each other toward the tip.

And the stylus 3 including the structure S of the pen in this example, specifically , as shown in Fig. 6, has a plurality of core holes 31a-31c, which are formed at one end of the pen barrel 10 and are oriented to open outwardly from the direction along the axis center line of the pen barrel 10, a plurality of stylus nibs 32a-32c as a plurality of pen nibs (11a-11c) inserted into the plurality of core holes 31a-31c respectively. The outer diameter of the barrel of the stylus tip 32a is determined to be approximately the same (in fact, slightly smaller) than the inner diameter of the corresponding core hole 31a.

### (Advantageous Effects)

(1) As has been described above, the stylus 3 in this example corresponds to a stylus 3, including the pen structure S described above, and a plurality of stylus tips 32a-32c disposed at one end of the pen barrel 10, which are oriented to open outward from a direction along the axis centerline of the pen barrel 10. Such a configuration makes the stylus 3 easy to switch colors, line types, and functions, and easy to write without interference during writing. That is, the stylus 3 in this example allows writing one color at a time (for each line type or function) without interference, while keeping the different colors (line types or functions) exposed.
(2) Since the pen includes three stylus tips 32a-32c, and the stylus tips 32a-32c are arranged at 120 degrees apart in the circumferential direction, the user can easily switch to a different color, line type or function simply by rotating the pen barrel 10 by 120 degrees in the forward or reverse direction.

The other configuration and advantageous effects are the same as in Example 1, and are therefore omitted.

### [Example 3]

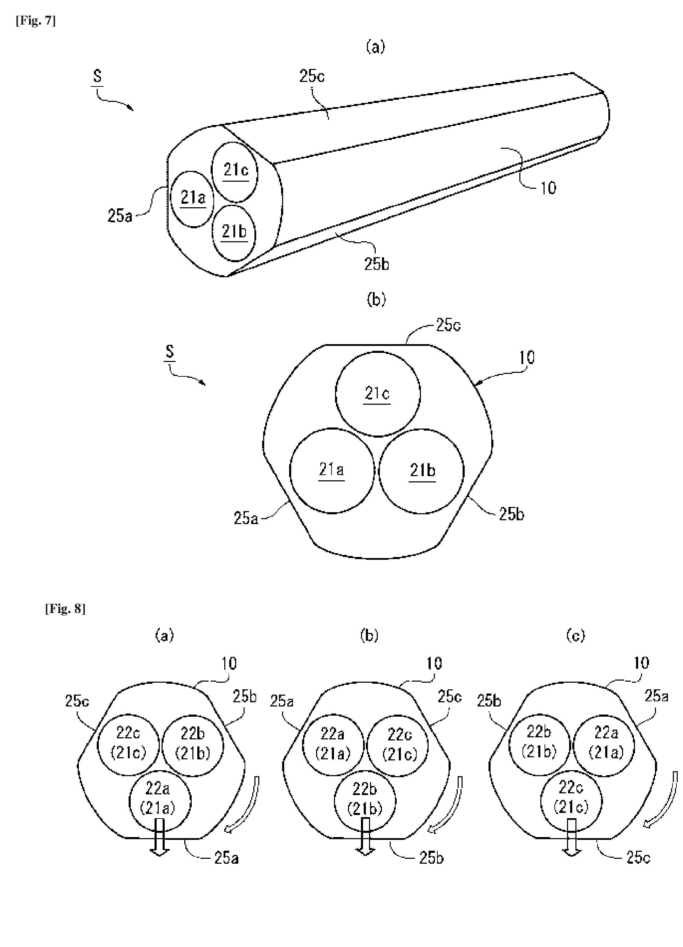

The structure S of the pen in a form different from Examples 1 and 2 will be described below with reference to Figs. 7 and 8. The same reference numerals will be used to describe parts that are identical or equal to those described in Examples 1 and 2.

### (Structure)

First, the configuration of the ballpoint pen (2) including the structure S of the pen of this example will be described. The ballpoint pen (2), as in Examples 1 and 2, includes three core holes 21a-21c, which are formed at one end of the pen barrel 10 and are oriented to open outward from a direction along the axis centerline of the pen barrel 10, as shown in Figs. 7 and 8, three core holes 21a-21c, and three color nibs (22a-22c) as three nibs (11a-11c) inserted respectively in the three holes 21a-21c.

In this pen structure S, as shown in Figs. 7(a) and 7(b), the cross-section of the pen barrel 10 is formed in a circular shape, and the circumference adjacent to the position of each of the plural pen nibs (color core; 22a-22c) is beveled to form plural flat surfaces 25a-25c. That is, in this pen structure S, the flat surfaces 25a-25c are formed around the same circumferential angle as the circumferential angle of the center of the core holes 21a-21c of the ballpoint pen (2). In cross-section, the radius through the center of the core holes 21a-21c passes through the midpoint of the strings comprising the flat surfaces 25a-25c. However, only two, or even only one, of the three flat surfaces 25a-25c may be chamfered.

More specifically, as shown in Fig. 7(b), the midpoint (centerline) of flat surface 25a has the same circumferential angle as that of the core hole 21a. In the same manner, the midpoints (centerlines) of flat surfaces 25b and 25c have the same circumferential angle as those of the core holes 25b and 25c.

### (Operations and Effects)

Next, the operations of the ballpoint pen (2) including the structure S of the pen of this example will be described with reference to Figs. 8(a)-8(c). As shown in Fig. 8(a), when writing with color core 22a (e.g., red), one flat surface 25a faces directly down (6 o'clock position), while the other two flat surfaces 25c and 25b are located at the 10 o'clock and 2 o'clock positions, respectively, facing diagonally upward. Therefore, when writing with the color core 22a, the pen barrel 10 can be held steady by pressing the flat surface 25a with the middle finger and the flat surfaces 25c and 25b with the index finger and thumb, respectively.

Next, as shown in Fig. 8(b), when writing with the color core 22b (e.g., blue), it is rotated clockwise from the state of Fig. 8(a) while the user's fingers contacting the flat surfaces 25a to 25c. In doing so, one flat surface 25b will face directly down (6 o'clock position), and the other two flat surfaces 25a and 25c will be at the 10 o'clock and 2 o'clock positions, respectively, facing diagonally upward. Therefore, when writing with the color core 22b, the pen barrel 10 can be held stably at three points by pressing the flat surface 25b with the middle finger and the flat surfaces 25a and 25c with the index finger and thumb, respectively.

In the same manner, as shown in Fig. 8(c), when writing with color core 22c (e.g., black), from the state shown in Fig. 8(b), it is rotated clockwise while the user's fingers contacting the flat surfaces 25a-25c. Then, one flat surface 25c will face directly down (6 o'clock position), and the other two flat surfaces 25b and 25a will be at the 10 o'clock and 2 o'clock positions, respectively, facing diagonally upward. Therefore, when writing with the color core 22c, the pen barrel 10 can be held stably at three points by holding the flat surface 25c with the middle finger and the flat surfaces 25b and 25a with the index finger and thumb, respectively.

As described above, when the pen barrel 10 has three color cores 22a-22c, the three flat surfaces 25a-25c make it easy to rotate and position the pen barrel 10 stably while holding it with fingers. In particular, when the pen barrel 10 is thin, it is difficult to adjust the angle delicately with the fingertip, but the chamfering makes it possible to actively guide the angle of the pen to a predetermined position (angle).

As has been described above, in the pen structure S of this example, the cross-section of the pen barrel 10 is formed in a circular shape, and the circumference adjacent to the position of each of the plural pen nibs (11a-11c) is chamfered to form one or more flat surfaces 25a-25c. This configuration makes it easy to rotate and stably position the pen barrel 10 while holding it with fingers.

The other configuration and advantageous effects are the same as in Example 1, and are therefore omitted.

### [Example 4]

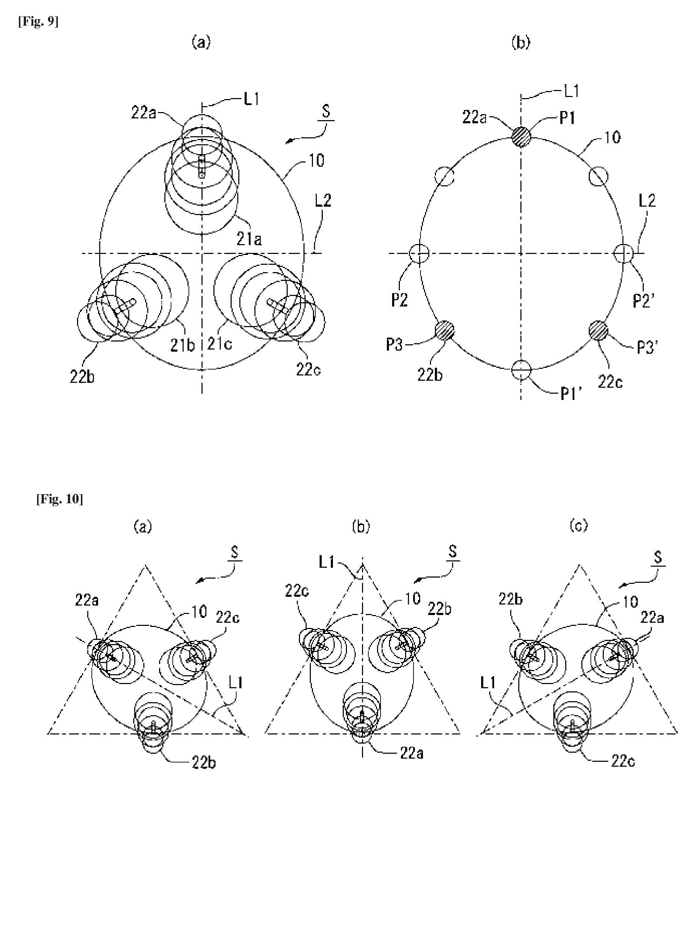

Next, the structure S of the pen in a form different from Examples 1-3 will be described with reference to Figs. 9 and 10. The same reference numerals will be used to describe parts that are identical or equal to those described in Examples 1-3.

### (Structure)

First, with reference to Figs. 9(a) and 9(b), the structure S of the pen in this example will be described. In the structure S of the pen in this example, as shown in Fig. 9(a), the cross-sectional shape of the pen barrel 10 is formed in an oval shape. That is, unlike ordinary pens and ballpoint pens, it is not circular (a perfect circle) but elliptical, having a major axis L1 and a minor axis L2. Specifically, the major axis L1 : minor axis L2 = (1.04 - 1.20) : 1.00 is preferred. More preferably, the major axis L1 : minor axis L2 = (1.05 - 1.10) : 1.00.

Further, the plurality of pen nibs 11a-11c are located at least at one of the following locations: at one vertex P1 on the major axis L1 side of the ellipse, and at two intermediate points P3 and P3' between two vertices P2 and P2' on the minor axis L2 side of the ellipse and the other vertex P1' on the major axis L1 side. In this example, the pen nibs 22a, 22b, and 22c are located at all three points of the one vertex P1, the intermediate points P3, and P3'. The intermediate points P3 and P3' can be determined as, for example, 240 degrees (P3; third quadrant; 22b) and 300 degrees (P3'; fourth quadrant; 22c) from the center of the ellipse in the case of Fig. 9(a).

### (Operations and Effects)

The structure S of the pen in this example corresponds to a pen structure S whose cross-section is a slight ellipse, adjusted so that the three nibs 22a-22c are in place. This ellipse touches the gap of the triangle made by the fingertips at three points just like a circular shape, but as shown in Figs. 10(a)-10(c), by making it an ellipse, there is a state in which the degree of fixation of the inscribed ellipse increases just at the position where the bisecting line of each corner of the triangle and the major axis L1 of the ellipse overlap. That is, in the state where the major axis L1 of the ellipse is inclined 60 degrees from vertical with the nib 22b below (see Fig. 10(a)), where the major axis L1 of the ellipse is standing vertically with the nib 22a below (see Fig. 10(b)), and where the major axis L1 of the ellipse is inclined 60 degrees from vertical with the nib 22c below (see Fig. 10(c)), the degree of fixation of the inscribed ellipse by the fingertip increases.

In each of these highly fixed states, the nibs 22a through 22c are positioned so that the selected nibs 22a (22b, 22c) face the paper, allowing the pen to instantly stop rotating at a stable angle facing the paper. This shape is particularly suitable for regular-sized or thicker pen nibs. The larger outer diameter makes it easier to rotate, suitable for long writing tasks such as designing on a desk, and less tiring than in the pen structure S (shape with a flat surface; chamfered shape) of Example 3.

As has been described above, the structure S of the pen in this example has an elliptical cross-section of the pen barrel 10, which allows the pen barrel 10 to be held more stably and in a more fixed position than a circular one.

In addition, since the plurality of pen nibs 22a-22c are positioned at least at one of the following locations: at one of the vertices P1 on the major axis L1 side of the ellipse, and at two intermediate points P3 and P3' between the two vertices P2 and P2' on the minor axis L2 side of the ellipse and the other vertex P1' on the major axis L1 side, a highly fixed placement of the pen nibs 22a to 22c makes it possible to instantly stop the rotation at a stable angle where the selected pen nibs 22a to 22c are facing the paper surface.

The other configuration and advantageous effects are the same as in Example 1, and are therefore omitted.

### [Example 5]

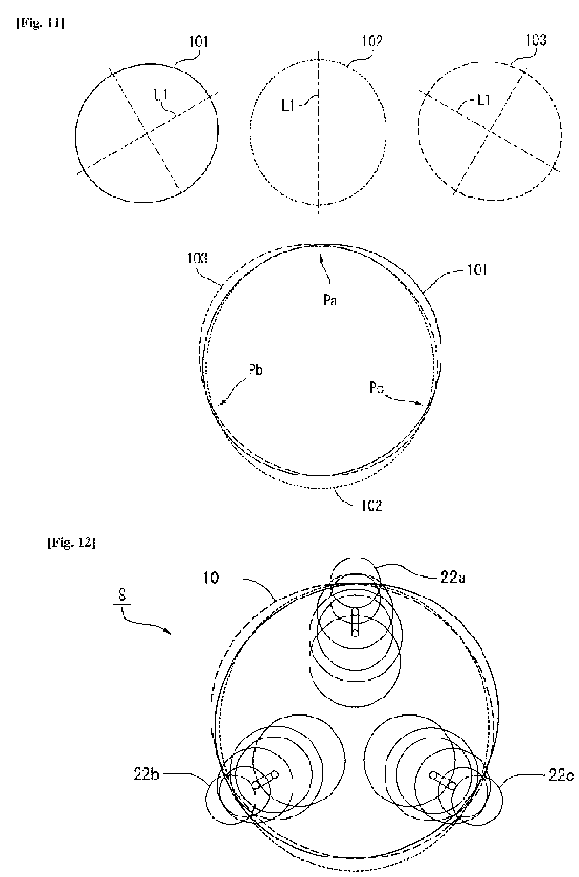

Next, the structure S of the pen in a form different from Examples 1-4 will be described with reference to Figs. 11 and 12. The same reference numerals will be used to describe parts that are identical or equal to those described in Examples 1-4.

### (Structure)

First, the structure S of the pen in this example will be described with reference to Figs. 11 and 12. In this example pen structure S, as shown in Figs. 11 and 12, the cross-sectional shape of the pen barrel 10 is formed so that it has the outline of three identical elliptical shapes 101 to 103 superimposed by rotating them by 120 degrees, and the pen nibs 22a, 22b, and 22c are arranged at the three positions Pa, Pb, and Pc where the elliptical shapes intersect. The pen nibs 22a, 22b, and 22c are arranged at the three positions Pa, Pb, and Pc where the ovals intersect. The center positions of these three ellipses 101-103 may be displaced from each other so that they form the vertices of an equilateral triangle.

That is, the cross-sectional shape of this example, in which three elliptical shapes are superimposed, can be called a "rice-ball shape" or a "square-rounded equilateral triangle." Specifically, as shown in Fig. 11, the external shape of the pen barrel 10 is defined by superimposing an ellipse 102 with the major axis L1 vertical, an ellipse 101 with the major axis L1 inclined -60 degrees from vertical, and an ellipse 103 with the major axis L1 inclined +60 degrees from vertical. The shape is then relatively flat centered at 8 o'clock (-120 degrees), 0 o'clock (0 degrees), and 4 o'clock (+120 degrees), and the pen nibs 22b, 22a, and 22c are placed at these three locations.

Thus, in this example pen structure S, the cross-sectional shape of the pen barrel 10 is a triangular rice-ball-like shape including three ellipses with slight flatness, rotated by 120 degrees each and superimposed. Then, the three pen nibs 22a-22c positions are balanced by placing the three nibs in a position where the outer shape lines of the ellipses overlap on the long axis line L1 of each ellipse 101-103.

### (Operations and Effects)

This makes it easier to stop the rotation of the pen when the pen is rotated and the depression of the pen is at the position of the middle finger on the paper side of the pen. At this time, the thumb and index finger also stop so that they are caught at the location of the indentation at each of the two shoulders of the rice ball shape. The next time the pen is rotated, the indentations are on both sides of the thumb and index finger, and thus it is easy to initiate rotation to either side by placing the fingers there.

The bulge/dimple is very slight and the entire circumference of the pen barrel 10 is smoothly rounded, and thus the rotation is not inhibited. This shape is also suitable for normal or thicker pen nibs, which are easier to rotate because of their larger outer diameter, and can be handled as a pen barrel 10 without discomfort since it is closer to a circle than a single oval. It corresponds to a shape that is less tiring, especially when writing for long periods of time, such as when designing on a desk.

As has been described above, the pen structure S in this example is formed so that the cross-section of the pen barrel 10 has the outline of three identical ellipses 101-103 rotated by 120 degrees and superimposed on each other, and the pen nibs 22a, 22b, and 22c are placed at the three positions Pa, Pb, and Pc where the ellipses 101-103 intersect, accordingly, the pen barrel 10 can be easily rotated and held in the proper position.

The other configuration and advantageous effects are the same as in Example 1, and are therefore omitted.

### (Summary)

According to the pen structure S of Examples 3 to 5, the selected pen nib (22a, 22b, 22c) can be instantly pointed at the paper surface without blurring, without losing the ease of rotation of the pen barrel 10.

The cross-sectional shape (grip shape) of the pen barrel 10 of the three types in Examples 3 to 5 can then be used in different ways depending on the model lineup of the pen, to suit their respective designs and functions. For example, when a pen barrel is also placed at the rear end of the pen barrel, the elliptical shape of Example 4 can be used to accommodate a large number of pen leads in the pen barrel without difficulty. Example 3 is suitable for a pen with a narrower barrel, such as for a notebook. In contrast, Example 5 is suitable for a thicker pen that is less tiring when working on a desk for a longer period of time.

If this principle of the cross-sectional shape (grip shape) of the pen barrel 10 is followed, pens with multiple nibs can be made easy to handle. In particular, since the sides of the pen barrel 10 are shaved or concave compared to the general circular shape of the pen barrel 10, it is possible to achieve an easy-to-use shape while also reducing the amount of material used.

The above examples of the invention have been described in detail with reference to the drawings. The specific configuration is not limited to these examples, and design changes to the extent that they do not depart from the gist of the invention are included in the invention.

For example, Example 1 describes the case of a ballpoint pen 2 in which all the pen tips are color-core, and Example 2 describes the case of a stylus 3 in which all the pen tips are stylus tips, but it is not limited to this, for example, one end may have a color core and the other end may have a stylus tip, or one end may have two color cores and one stylus tip.

Furthermore, in Example 1, the case in which the color cores 21a-21c and 24 are formed about half the length of the pen barrel 10 is described, but the configuration is not limited to this case; they can also be formed to be the same length as the entire length of the pen barrel 10 if they do not interfere with the structure at the other end.

Moreover, if the three pen core holes 21a-21c on the tip side (left side) are lapped in cross-section with the core hole 23 on the base side (right side), (for example, if a right-shaped core hole 23 is formed in the center), a four-color pen with a short overall length of pen barrel 10 can be constructed.

In the examples, the standard way of holding a pen has been described, but it is not limited to this, for example, there is a possibility that the pen is held with the thumb straight out. In such a case, the triangle created by the three fingers would be an inverted triangle with respect to the paper surface. This can be handled by twisting the position of the chamfer described above by 60 degrees, so that the chamfered part in the original model is convex and the un-chamfered part is concave (chamfered), and vice versa.

### INDUSTRIAL APPLICABILITY

As described above, the pen structure has a pen barrel to be held by hand, and a plurality of pen nibs located at one end of the pen barrel, which are oriented to open outward from a direction along the axis centerline of the pen barrel. Such a configuration makes the pen structure easy to operate for switching colors and functions, and easy to write without interference when writing.

### [Reference Numerals]

S Pen Structure
P1 1st vertex
P2 2nd vertex
P3 Intermediate point
L1 Major axis
L2 Short axis
10 Pen barrel
101-103 Ellipse
11a, 11b, 11c Nib (tip side)
12 Nib (base side)
13 Eraser
2 Ballpoint pen
21a, 21b, 21c Core hole
22a, 22b, 22c Color core
23 Core hole (base end side)
24 Color core (base side)
25a-25c Flat surface
3 Stylus
31a, 31b, 31c Core hole
32a, 32b, 32c Stylus tip
33 Wick hole (base end side)
34 Lead of stylus (base side)
35 Eraser

## Claims

1. A pen structure, comprising:
a pen barrel to be held by hand, and
a plurality of pen nibs disposed at one end of the pen barrel, and oriented to open outward from a direction along an axis centerline of the pen barrel.

2. The pen structure according to claim 1, wherein a cross-section of the pen barrel is circularly formed and circumference adjacent to each of the plurality of pen nib locations is chamfered to form one or more flat surfaces.

3. The pen structure according to claim 1, wherein a cross-section of the pen barrel is elliptically shaped.

4. The pen structure according to claim 3, wherein the plurality of the pen nibs are located at least at one of the following positions: at one of apexes on a major axis side of an ellipse, and at two intermediate points between two apexes on a minor axis side and the other apex on the major axis side.

5. The pen structure according to claim 1, wherein a cross-section of the pen barrel is formed so that it has an outline of three identical elliptical shapes rotated by 120 degrees and superimposed on each other, and wherein each nib is positioned at three positions where the elliptical shapes intersect.

6. A ballpoint pen, provided with the pen structure according to any one of claims 1 to 5, wherein
a plurality of core holes formed in one end of the pen barrel, the plurality of core holes oriented to open outwardly from a direction along the axis centerline of the pen barrel; and
the ballpoint pen is provided with a plurality of color cores as a plurality of nibs inserted into the corresponding core holes.

7. The ballpoint pen according to claim 6, having three of the core holes and three of the color cores, the color cores being arranged at 120 degrees apart in a circumferential direction.

8. The ballpoint pen according to claim 7, wherein a plurality of the color cores are freely inserted and retracted into the corresponding core holes and further include a movement mechanism to move all of the plurality of color cores forward and backward simultaneously.

9. A stylus, provided with the pen structure according to any one of claims 1 to 5, wherein the stylus has a plurality of stylus tips disposed at one end of the pen barrel and is oriented to open outwardly from a direction along the axis centerline of the pen barrel.

10. A stylus according to claim 9, having three of the stylus tips, the stylus tips being arranged at 120 degrees apart in a circumferential direction.

11. The ballpoint pen according to claim 6, further comprising one or more nibs disposed at the other end of the pen barrel.

12. The ballpoint pen according to claim 6, further comprising an eraser located at the other end of the pen barrel.
